# EUROPÄISCHE PATENTSCHRIFT

(11) **EP 2 354 870 B1**
(45) Veröffentlichungstag und Bekanntmachung des Hinweises auf die Patenterteilung: **05.11.2014**
(21) Anmeldenummer: 11153092.9
(22) Anmeldetag: 02.02.2011
(51) Int. Cl.: G05B 19/042

(54) **Vorrichtung zum Steuern von Betriebsfunktionen einer Werkzeugmaschine**
Device for controlling operating functions of a tool machine
Dispositif de commande de fonctions de fonctionnement d'une machine-outil

(30) Priorität: 02.02.2010 DE 102010001518
(43) Veröffentlichungstag der Anmeldung: 10.08.2011
(73) Patentinhaber: DECKEL MAHO Pfronten GmbH, 87459 Pfronten (DE)
(72) Erfinder: Bornemann, Armin, 87616, Marktoberdorf (DE); Kettemer, Rolf, 87616, Marktoberdorf (DE); Gstir, Walter, 6677, Schattwald (AT); Pruschek, Peter, 87459, Pfronten (DE)
(74) Vertreter: MERH-IP Matias Erny Reichl Hoffmann

(56) Entgegenhaltungen:
- EP-A1- 0 909 997
- JP-A- 2001 277 071
- US-A1- 2002 003 414
- US-A1- 2006 006 565
- Benjamin Kuhrke ET AL: "Die Energiebilanz muss stimmen", , 31. August 2007 (2007-08-31), XP055060870, Gefunden im Internet: URL:http://www.werkstatt-betrieb.de/ta999/ na20100707143426/bi2007081015112-93/Die-En ergiebilanz-muss-stimmen_archiv.html&ei=B4 F3UfL-M6m14AS53IAw&usg=AFQjCNGNdhiTEhWdnGv cno9Q29u-p5uuFA&bvm=bv.45580626,d.ZWU [gefunden am 2013-04-24]
- Sandra Rauch: "Strombedarf in der Produktion senken", Produktion, Nr 42, 15. Oktober 2009 (2009-10-15), XP055060877, Gefunden im Internet: URL:http://www.produktion.de/imperia/md/co ntent/ai/produktion/fachartikel/2009/42/pr o09_42_014.pdf [gefunden am 2013-04-24]
- Enviprot: "AutoShutdownManager, Version 4, Handbuch", , 7. März 2009 (2009-03-07), XP055061047, Gefunden im Internet: URL:http://www.enviprot.de/ [gefunden am 2013-04-25]

## Beschreibung

Die Erfindung betrifft eine Vorrichtung zum Steuern von Betriebsfunktionen einer Werkzeugmaschine insbesondere im Zusammenhang mit dem Abschalten der Werkzeugmaschine.

Der Trend zum umweltorientierten Ressourceneinsatz hat in den letzten Jahren zunehmend an Bedeutung gewonnen. Dabei hat die Optimierung der Energiebilanz auch in vielen Bereichen des Maschinenbaus Einzug gehalten und Energieeinsparung ist heute ein wichtiger Aspekt, der bereits im Forschungs- und Entwicklungsstadium Berücksichtigung findet.

Gleichzeitig besteht beim Betrieb einer Werkzeugmaschine für das Bedienpersonal einerseits, als auch den störungsfreien Maschinenbetrieb andererseits, ein erhebliches Gefährdungspotenzial, das auf die Erhöhung der Komplexität der Bearbeitungsvorgänge und die Leistungszunahme moderner Bearbeitungszentren in den letzten Jahren zurückzuführen ist.

Eine gattungsgemäße Werkzeugmaschine ist aus der EP 0 909 997 A1 bekannt.

Aus dem Artikel von Sandra Rauch: "Strombedarf in der Produktion senden", Produktion, Nr. 42, 15. Oktober 2009 ist zudem eine Werkzeugmaschine mit Auto-Shutdown-Funktion, ähnlich wie bei einem Notebook bekannt.

In der Veröffentlichung von Enviprot: "AutoShutdownManager, Version 4, Handbuch", 7. März 2009, sind entsprechende Implementierungen einer derartigen Auto-Shutdown-Funktion im PC-Bereich beschrieben.

Die vorliegende Erfindung liefert einen Beitrag zur Energiesenkung und zur Erhöhung der Sicherheit beim Betrieb von Werkzeugmaschinen, und die Aufgabe der Erfindung ist es, eine Vorrichtung bereitzustellen, die es dem Anwender gestattet, in einfacher Weise den Betrieb einer Werkzeugmaschine in ihren unterschiedlichen Betriebsmoden energie- und sicherheitsoptimiert zu gestalten.

Diese Aufgabe wird durch eine Vorrichtung zum Steuern von Betriebsfunktionen einer Werkzeugmaschine nach Anspruch 1 gelöst.

Erfindungsgemäß umfasst die Vorrichtung zum Steuern von Betriebsfunktionen einer Werkzeugmaschine eine Einrichtung zum Einschalten bzw. Abschalten einer Hauptenergieversorgung der Werkzeugmaschine und mindestens eine Einrichtung zum Festlegen eines Abschaltzeitpunkts einer Betriebsfunktion der Werkzeugmaschine in Abhängigkeit eines vorbestimmten auswählbaren Kriteriums.

Einem Aspekt der Erfindung liegt dabei die Idee zugrunde, zwischen der Hauptenergieversorgung der Werkzeugmaschine (Spannung, Strom) und einzelnen Betriebsfunktionen zu differenzieren und Einrichtungen zum Festlegen eines Abschaltzeitpunkts bereitzustellen, die es ermöglichen, die Energieversorgung für spezielle Werkzeugmaschinenaggregate und/oder Komponenten jeweils separat zu steuern.

Durch das erfindungsgemäße Konzept wird es somit ermöglicht, den Energieverbrauch zu senken, obgleich die Werkzeugmaschine noch am Hauptschalter eingeschaltet ist.

Zudem wird es durch den erfindungsgemäßen Ansatz ermöglicht, je nach Betriebsmodus, der durch das gewählte Bearbeitungsprogramm und die dabei aktivierten Aggregate bzw. Maschinenkomponenten bestimmt wird, eine flexible Ein- bzw. Abschaltung der notwendigen Funktionen vorzunehmen, ohne die Hauptenergieversorgung der Werkzeugmaschine zu unterbrechen. Der erfindungsgemäße Ansatz bringt gegenüber dem herkömmlichen Programmieren insbesondere den Vorteil mit sich, dass die entsprechende Festlegung des Kriteriums zur Bestimmung des Abschaltzeitpunkts nicht bei Programmierung im Rahmen der Erstellung des Teilprogramms erfolgen muss, sondern flexibel zu einem späteren Zeitpunkt, sinnvollerweise beispielsweise direkt durch den Bearbeiter an der Werkzeugmaschine etwa nach Programmstart durchgeführt werden kann.

Der Begriff "Abschatten" im Sinne der Erfindung ist dabei nicht auf eine vollständige Abschaltung beschränkt, sondern umfasst definitionsgemäß auch Betriebszustände, bei denen die betreffende Betriebsfunktion lediglich reduziert ist.

Eine besonders vorteilhafte Ausgestaltung der erfindungsgemäßen Vorrichtung sieht vor, dass die Einrichtung(en) zum Festlegen eines Abschaltzeitpunkts jeweils eine Einrichtung zur Festlegung der Abschaltuhrzeit durch den Bearbeiter aufweist bzw. aufweisen. Bei diesem Ausführungsbeispiel ist das maßgebliche Kriterium, nach dem die Festlegung des Abschaltzeitpunkts erfolgt, die Zeit, die auf verschiedene Weise ausgewählt werden kann. Dem Bearbeiter wird dabei mittels dieser Einrichtung die Möglichkeit gegeben, entweder eine bestimmte Uhrzeit festzulegen, oder ein Zeitintervall beispielsweise in Minuten, Stunden oder Tagen vorzugeben, währenddessen die betreffende Funktion vor dem Abschalten noch aktiviert bleiben soll.

Diese Ausführungsform ist insbesondere für Anwendungen hilfreich, bei denen beispielsweise bereits beim Start des Bearbeitungsprogramms vom Bearbeiter an der Werkzeugmaschine abgeschätzt werden kann, wie lange die einzelnen Betriebsfunktionen benötigt werden. Die Auswahl des Zeitpunktes bzw. der Zeitspanne kann bei diesem Ausführungsbeispiel in besonders effektiver Weise mittels eines entsprechenden Softwaremenüs erfolgen, das für die einzelnen Betriebsfunktionen Eingabefelder bereitstellt in das entsprechende numerische Werte eingegeben werden können. Der Vorteil dieser Ausgestaltung besteht nicht nur darin, dass die Energieversorgung der einzelnen Komponenten der Werkzeugmaschine in einfacher Weise flexibel festgelegt werden kann, sondern vor allem auch darin, dass die Abschaltung der entsprechenden Funktionen zum vorgegebenen Zeitpunkt nicht durch den Bearbeiter selbst vorgenommen werden muss, so dass z. B. bei Nachtschichten der Personalbedarf deutlich verringert werden kann bis hin zum Hineinarbeiten in unbeaufsichtigte Schichten.

Bei einem weiteren Ausführungsbeispiel der erfindungsgemäßen Vorrichtung ist das Kriterium zur Festlegung des Abschaltzeitpunkts der Eintritt eines vorbestimmten Betriebszustands der Werkzeugmaschine. In vielen Fällen ist beispielsweise die Beendigung eines Ablaufs eines Bearbeitungsprogramms ein solcher Betriebszustand, bei dessen Erreichen bestimmte Betriebsfunktionen abgeschaltet werden können. Die Erfindung ist jedoch nicht hierauf beschränkt und der zu erreichende Betriebszustand kann ein beliebiger, vorgegebener Betriebszustand sein, wie zum Beispiel Beendigung eines Teilbearbeitungsschritts, Werkzeugwechsel, oder auch der Eintritt des Abschaltzustands einer vorbestimmten weiteren Betriebsfunktion der Werkzeugmaschine. Beispielsweise kann auch die Temperatur des Kühlschmiermittels der Werkzeugmaschine oder die reduzierte Zahl der Umwälzungen des Kühlschmiermittels vor, nach oder während eines bestimmten Bearbeitungsabschnitts als maßgebliches Kriterium für die Festlegung des Abschaltzeitpunkts festgelegt werden.

Wichtig ist jedoch, dass dabei die Werkzeugmaschine derart eingerichtet ist, dass die verschiedenen Betriebszustände, deren Eintritt den Abschaltzeitpunkt gemäß Festlegung durch den Anwender bestimmen können, in der Maschinenkonfiguration auswählbar vorbestimmt sind, so dass sie vom Bearbeiter der Werkzeugmaschine beispielsweise aus einer vorgegebenen Tabelle im Rahmen einer Menüführung zur Festlegung des Abschaltablaufs der gesamten Maschine oder einzelner Aggregate oder Betriebsfunktionen ausgewählt und ggf. bezüglich ihres Parameterwerts eingestellt werden können.

So kann bei diesem Ausführungsbeispiel die erfindungsgemäße Vorrichtung zum Steuern von Betriebsfunktionen derart konfiguriert sein, dass der entsprechende Betriebszustand in einer Auswahlliste vorgegeben ist, wobei die Einrichtung zum Festlegen eines Abschaltzeitpunkts an einer Betriebsfunktion der Werkzeugmaschine so ausgestaltet ist, dass das entsprechende Kriterium vom Bearbeiter z. B. aus einem Pulldown-Menü, in dem verschiedenen Betriebszustände vorgegeben sind, ausgewählt werden kann. Alternativ kann z.B. auch eine softwarebasierte Abfrageprozedur vorgesehen sein.

Ein inhärenter Vorteil der erfindungsgemäßen Struktur besteht darin, dass bestimmte Betriebsfunktionen trotz eines weitgehenden Abschaltzustands der Werkzeugmaschine fortlaufen können, da die Maschine am Hauptschalter eingeschaltet bleibt. Erfindungsgemäß ist bei der erfindungsgemäßen Vorrichtung die Abschaltung einzelner Betriebsfunktionen durch den Bearbeiter an die Bedingung geknüpft , dass sicherheitsrelevante Betriebsfunktionen der Werkzeugmaschine fortlaufen. Zu diesem Zweck weist die erfindungsgemäße Vorrichtung zum Steuern von Betriebsfunktionen einer Werkzeugmaschine eine Einrichtung zur Überwachung von sicherheitsrelevanten Einrichtungen auf. Die mindestens eine Einrichtung zum Festlegen eines Abschaltzeitpunkts ist derart konfiguriert , dass eine Festlegung eines Abschaltzeitpunkts für vorbestimmte Betriebsfunktionen nur möglich ist, falls die Einrichtung zur Überwachung von sicherheitsrelevanten Einrichtungen keine sicherheitsgefährdenden Betriebszustände der Werkzeugmaschine detektiert hat. Auf diese Weise kann gewährleistet werden, dass beim Abschalten einer Werkzeugmaschine ohne Aufsicht keine sicherheitsgefährdenden Betriebszustände eintreten können, da vorbestimmte Sicherheitskreise aktiviert bleiben.

Ein Beispiel für einen derartigen sicherheitsgefährdenden Betriebszustand kann bereits der Ausfall oder der Abschaltzustand der Einrichtung zur Überwachung von sicherheitsrelevanten Einrichtungen selbst sein, so dass in diesem Fall eine Abschaltung vorbestimmter Betriebsfunktionen der Werkzeugmaschine durch die erfindungsgemäße Konfiguration zuverlässig verhindert wird.

Durch Vorgabe verschiedener Abschaltzeitpunkte für bestimmte Komponenten der Werkzeugmaschine mittels der Einrichtung zum Festlegen eines Abschaltzeitpunkts einer Betriebsfunktion der Werkzeugmaschine wird ein geführtes Abschalten der Maschine ermöglicht in der Weise, dass alle Belange des sicheren Stillsetzens erfüllt werden. Hierzu gehört insbesondere auch das geführte Abschalten der Steuerung der Werkzeugmaschine derart, dass sensible Bestandteile, wie z.B. Festplatten, entsprechend geschützt werden, indem verschiedene Abschaltzeitpunkte oder Kriterien, wie z. B das Herunterfahren einer Festplatte vor dem Abschalten der Hauptversorgung, festgelegt werden.

Die Kriterien "Zeitpunkt" (Uhrzeit oder Zeitdauer) und "Ereignis" (Erreichen eines Betriebszustands) können auch kombiniert werden, z. B. in Form einer Festlegung eines Abschaltzeitpunkts derart, dass 2 Minuten nach der Beendigung des Teileprogramms z. B. der Motor des Hauptantriebs abgeschaltet wird.

Bei den Einrichtungen zum Festlegen eines Abschaltzeitpunkts einer Betriebsfunktion der Werkzeugmaschine handelt es sich bei bevorzugten Ausführungsbeispielen um eine oder mehrere Einrichtungen aus der folgenden Gruppe: Eine Einrichtung zum Festlegen eines Abschaltzeitpunkts, zu dem der Motor des Hauptantriebs der Werkzeugmaschine abgeschaltet wird; eine Einrichtung zum Festlegen eines Abschaltzeitpunkts, zu dem ein Druck einer Sperrluftversorgung der Werkzeugmaschine reduziert wird; eine Einrichtung zum Festlegen eines Abschaltzeitpunkts; zu dem eine Energieversorgung eines Bildschirms der Werkzeugmaschine reduziert wird; eine Einrichtung zum Festlegen eines Abschaltzeitpunkts, zu dem eine Energieversorgung einer Beleuchtungseinrichtung der Werkzeugmaschine reduziert wird; eine Einrichtung zum Festlegen eines Abschaltzeitpunkts, zu dem eine Temperatur des Kühlschmiermittels der Werkzeugmaschine reduziert wird; eine Einrichtung zum Festlegen eines Abschaltzeitpunkts, zu dem eine Umwälzung des Kühlschmiermittels der Werkzeugmaschine reduziert wird; und eine Einrichtung zum Festlegen eines Abschaltzeitpunkts, zu dem ein Steuerrechner der Werkzeugmaschine in einen Stromsparmodus versetzt wird, wobei dies keine abschließende Aufzählung darstellt. Weitere Beispiele betreffen Einrichtungen zum Festlegen eines Abschaltzeitpunktes zu dem eines oder mehrere der folgenden Systeme oder Aggregate abgeschaltet wird: Spänefördersystem, Spülpumpen, Absauganlage, Werkzeugmagazin, Messeinrichtungen wie z.B. Lasermesssysteme, Kühlsysteme z.B. für Fräs-Dreh-Tisch, Hauptantrieb oder Schaltschrank, Reinigungssysteme, Schmiersysteme (Öl-Luft, Fett) und Hydraulikkomponenten für Pumpen, Ventilkreise und Gewichtsausgleich.

Der Begriff Betriebsfunktion im Sinne der Erfindung umfasst die verschiedenen Betriebsarten sämtlicher Komponenten und Aggregate der Werkzeugmaschine, an denen Strom ansteht, wie zum Beispiel Hauptantrieb, Vorstellantriebe, Hydraulikpumpensystem, Pneumatikpumpensystem, Späneförderer, Werkzeugmagazin, Steuerungen etc. ohne auf die genannten Aggregate bzw. Komponenten eingeschränkt zu sein.

Je nach vorhandener Einrichtung zum Festlegen eines Abschaltzeitpunkts kann die erfindungsgemäße Vorrichtung eine oder mehrere Anzeigeeinrichtungen aufweisen, die dazu konfiguriert sind, anzuzeigen, ob eine oder mehrere der Maschinenfunktionen, für die eine Einrichtung zum Festlegen eines Abschaltzeitpunkt vorgesehen ist, sich im Abschaltzustand oder im Einschaltzustand befinden. Diese Ausgestaltung ermöglicht es dem Bearbeiter an der Werkzeugmaschine, den jeweils aktuellen Betriebszustand der Werkzeugmaschine einschließlich ihrer verschiedenen Komponenten mit einem Blick zu erfassen.

Bei einer erweiterten Ausgestaltung der erfindungsgemäßen Vorrichtung ist die Einrichtung zum Festlegen eines Abschaltzeitpunkts derart konfiguriert, dass sie durch den Bearbeiter nur dann genutzt werden können, wenn der Bearbeiter eine hierzu benötigte entsprechende Berechtigungsstufe aufweist. Zu diesem Zweck kann die Vorrichtung eine oder mehrere Berechtigungsprüfungseinrichtungen umfassen, die den Zugriff auf die entsprechenden Einrichtungen zum Festlegen eines Abschaltzeitpunkts erst nach entsprechender authentifizierender Dateneingabe oder Empfang eines entsprechenden Signals freigeben. Die Dateneingabe kann über die Tastatur oder eine Chipcard und die Signalübertragung kann z. B über ein Transpondersystem, wie es von der Anmelderin beispielsweise in dem Patent DE 10 2007 041 768.5 beschrieben worden ist, erfolgen.

Eine vorteilhafte Erweiterung der erfindungsgemäßen Vorrichtung zum Steuern von Betriebsfunktionen einer Werkzeugmaschine sieht vor, dass die mindestens eine Einrichtung zum Festlegen eines Abschaltzeitpunkts einer Betriebsfunktion der Werkzeugmaschine eine Einrichtung zur Festlegung des Betriebszustands einer Funktion der Werkzeugmaschine nach der Abschaltung aufweist.

Dabei kann es sich um die Funktion handeln, für die ein Abschaltzeitpunkt festgelegt wurde. Diese Einrichtung gestattet es den Abschaltzustand der betreffenden Maschinenfunktion nutzerseitigje nach Anwendungsfall variabel zu definieren. So kann z.B. bestimmt werden, dass die Temperierung des Kühlschmiermittels 5 Minuten nach Ablauf des Teilprogramms gestoppt wird und dann wieder aufgenommen wird, wenn sie eine bestimmte Mindesttemperatur unterschreitet.

Bei der Einrichtung zur Festlegung des Betriebszustands einer Funktion der Werkzeugmaschine nach dem Abschaltzeitpunkt kann es sich aber auch um eine andere Betriebsfunktion handeln als die, für die der Abschaltzeitpunkt festgelegt wurde. Diese Ausgestaltung ist insbesondere dann sinnvoll, wenn unmittelbar nach dem Abschalten eines bestimmten Aggregats ein Folgeprozess ausgeführt werden soll, wie zum Beispiel Umdrehungen des Späneförderers nach Abschaltung des Hauptantriebs nach abgeschlossener Werkstückbearbeitung. Auf diese Weise kann ein gewisser Nachlauf bestimmter Aggregate verwirklicht werden, was bislang nur durch entsprechende manuelle Auslösung der betreffenden Betriebsfunktion durch den Bediener möglich war.

Was die Hauptenergieversorgung der Werkzeugmaschine anbetrifft, liegt ein wesentlicher Vorteil der vorliegenden Erfindung auch darin, dass die Werkzeugmaschine immer noch am Hauptschalter eingeschaltet bleiben kann, wenn durch den Bearbeiter für die entsprechende Einrichtungen Abschaltzeitpunkte für die entsprechenden Maschinenkomponenten und/oder-funktionen festgelegt werden, da es bei der erfindungsgemäßen Konfiguration der Werkzeugmaschine nicht notwendig ist, vor dem Hauptschalter einen Abgriff der benötigten Steuerspannungen und der Stromkreise für die Energieversorgung der restlichen benötigten Komponenten vorzusehen. Hierdurch entfallen die erforderlichen speziellen Bauteile und deren Verarbeitung im Schaltschrank. Dabei kann die Maschine zur Erfüllung der einschlägigen Sicherheitsnormen derart konfiguriert sein, dass bei Abschaltung der Energieversorgung durch Betätigung des Hauptschalters der Werkzeugmaschine die mindestens eine Einrichtung zum Festlegen eines Abschaltpunktes aktiviert wird, so dass die entsprechende Funktion ohne Verzögerung abgeschaltet wird.

Eine wesentliche Ergänzung erfährt das erfindungsgemäße Konzept dadurch, dass die Vorrichtung zum Steuern von Betriebsfunktionen einer Werkzeugmaschine zusätzlich mindestens eine Einrichtung zum Festlegen eines Wiedereinschaltzeitpunkts aufweist, zu dem eine Betriebsfunktion der Werkzeugmaschine nach dem Abschalten wieder aktiviert wird.

Durch derartige Einrichtungen zum Festlegen eines Wiedereinschaltzeitpunkts können die betreffenden Komponenten der Werkzeugmaschine beispielsweise zeitgesteuert wieder in Betrieb genommen werden, ohne dass durch das Bedienpersonal zum Wiedereinschaltzeitpunkt Befehle eingegeben oder manuell zu bedienende Tasten betätigt werden müssen. Auf diese Weise wird es ermöglicht, die verschiedenen Betriebsfunktionen der Werkzeugmaschine beispielsweise zu Beginn einer neuen Schicht wieder sukzessive in Betrieb zu nehmen, ohne dass unnötig Energie durch die Verbraucher verbraucht wird, selbst bei reduziertem Personal zur Maschinenbedienung.

Der Zustand, dass sich bestimmte Betriebsfunktionen der Maschine sich nach dem Abschalten in einem "Wake-up"-Modus, d. h. mit reduzierter Betriebsfunktion aber nicht vollständig abgeschaltet, befinden, kann durch eine entsprechende Anzeige, wie z.B. eine blinkende Signalleuchte am Bedienpult, dargestellt werden.

Eine sinnvolle Ausgestaltung der Einrichtung zum Festlegen eines Wiedereinschaltzeitpunkts umfasst eine Einrichtung zur Festlegung der Einschaltuhrzeit durch den Bearbeiter. Der Wiedereinschaltzeitpunkt kann jedoch ebenso ereignisgetriggert sein, wobei das Ereignis der Eintritt eines bestimmten Betriebszustands der Werkzeugmaschine sein kann.

Bei einer besonders bevorzugten Ausführungsform der erfindungsgemäßen Vorrichtung können vorteilhafterweise mehrere Wiedereinschaltzeitpunkte menügesteuert aus einer Gruppe von Ereignissen, d. h. Eintritt eines bestimmten Betriebszustandes der Werkzeugmaschine, und/oder durch Vorgabe eines durch Uhrzeit oder Zeitintervall vorbestimmten Zeitpunktes ausgewählt werden. Auf diese Weise kann beispielsweise ein gezielter Warmlauf der Maschine zur Wiederinbetriebnahme konfiguriert werden, in Abhängigkeit der Erfordernisse der geplanten bzw. durch das anstehende Programm vorgegebenen Bearbeitungsschritte.

In analoger Weise zur oben beschriebenen Einrichtung zum Festlegen eines Abschaltzeitpunkts kann auch die Einrichtung zur Festlegung eines Wiedereinschaltzeitpunkts eine Einrichtung zur Festlegung eines Betriebszustands einer Funktion der Werkzeugmaschine nach dem Zeitpunkt der Wiedereinschaltung aufweisen. Dies kann die Betriebsfunktion betreffen, die durch die Wiedereinschaltung aktiviert wurde, es kann jedoch auch eine weitere Betriebsfunktion der Werkzeugmaschine betreffen, die nicht der Betriebsfunktion entspricht, für die der Wiedereinschaltzeitpunkt festgelegt wurde.

Bei einer bevorzugten Einrichtung zum Festlegen eines Wiedereinschaltzeitpunkts handelt es sich um eine oder mehrere der Einrichtungen aus der folgenden Gruppe: Eine Einrichtung zum Festlegen eines Wiedereinschaltzeitpunkts, zu dem eine Hauptenergieversorgung der Werkzeugmaschine nach dem vollständigen Abschalten über den Hauptschalter wieder eingeschaltet wird; eine Einrichtung zum Festlegen eines Wiedereinschaltzeitpunkts, zu dem der Motor des Hauptantriebs der Werkzeugmaschine nach dem Abschalten wieder eingeschaltet wird; eine Einrichtung zum Festlegen eines Wiedereinschaltzeitpunkts, zu dem ein Druck einer Sperrluftversorgung der Werkzeugmaschine nach dem Abschalten wieder erhöht wird; eine Einrichtung zum Festlegen eines Wiedereinschaltzeitpunkts, zu dem eine Energieversorgung eines Bildschirms der Werkzeugmaschine nach dem Abschalten wieder erhöht wird; eine Einrichtung zum Festlegen eines Wiedereinschaltzeitpunkts, zu dem eine Energieversorgung einer Beleuchtungseinrichtung der Werkzeugmaschine nach dem Abschalten wieder erhöht wird; eine Einrichtung zum Festlegen eines Wiedereinschaltzeitpunkts, zu dem eine Temperatur des Kühlschmiermittels der Werkzeugmaschine nach dem Abschalten wieder erhöht wird; eine Einrichtung zum Festlegen eines Wiedereinschaltzeitpunkts, zu dem eine Umwälzung des Kühlschmiermittels der Werkzeugmaschine nach dem Abschalten wieder erhöht wird; und eine Einrichtung zum Festlegen eines Wiedereinschaltzeitpunkts, zu dem ein Steuerrechner der Werkzeugmaschine wieder aktiviert wird, wobei auch dies keine abschlie-βende Aufzählung darstellt. Weitere Beispiele betreffen Einrichtungen zum Festlegen eines Wiedereinschaltzeitpunktes zu dem eines oder mehrere der folgenden Systeme oder Aggregate eingeschaltet wird: Spänefördersystem, Spülpumpen, Absauganlage, Werkzeugmagazin, Messeinrichtungen wie z.B. Lasermesssysteme, Kühlsysteme z.B. für Fräs-Dreh-Tisch, Hauptantrieb oder Schaltschrank, Reinigungssysteme, Schmiersysteme (Öl-Luft, Fett) und Hydraulikkomponenten für Pumpen, Ventilkreise und Gewichtsausgleich.

Ein wesentlicher Vorteil der erfindungsgemäßen Einrichtungen zum Festlegen eines Abschaltzeitpunkts bzw. zur Festlegung eines Wiedereinschaltzeitpunkts einer Betriebsfunktion der Werkzeugmaschine besteht darin, dass durch das stufenweise Abschalten bzw. Wiedereinschalten von Betriebsfunktionen der Werkzeugmaschine Prozessabläufe vorgegeben werden können, die bislang von der Bedienperson der Werkzeugmaschine durch händische Bedienung vorgenommen werden mussten. Auf diese Weise wird es ermöglicht, das Wissen und die Erfahrung der betreffenden Personen in Maschinenanweisungen umzusetzen, die dann auf jeder Maschine angewendet werden können, selbst im überwachungsfreien Betrieb. Zudem wird eine wichtiger Beitrag zum automatisierten Betrieb im Zusammenhang mit dem Abschalten und dem Wiedereinschalten der Werkzeugmaschine geleistet.

Die erfindungsgemäße Vorrichtung kann zudem die bereits erwähnte Einrichtung zum Überwachen von sicherheitsrelevanten Einrichtungen aufweisen und die Einrichtung zum Festlegen eines Wiedereinschaltzeitpunkts kann derart konfiguriert sein, dass bestimmte Betriebsfunktionen nicht wieder aktiviert werden können, wenn die Einrichtung zur Überwachung von sicherheitsrelevanten Einrichtungen einen sicherheitsgefährdenden Betriebszustand der Werkzeugmaschine detektiert.

Bei einem bevorzugten Ausführungsbeispiel ist diese Einrichtung zur Überwachung von sicherheitsrelevanten Einrichtungen als Sensor ausgestaltet, der detektiert, ob sich Personen im Arbeitsraum der Maschinen aufhalten. Die Erfindung ist jedoch nicht hierauf begrenzt und die Einrichtung zur Überwachung der sicherheitsrelevanten Einrichtung kann beispielsweise den Zugang zum Werkzeugmagazin, oder dem Rüstplatz, das Schließen der Kabinentür durch entsprechend geeignete Sensoren (Lichtschranken etc.) überwachen. Eine Auflistung signifikanter Gefährdungshauptquellen und Hauptquellen dieser Gefährdung bei Bearbeitungszentren ist in Tabelle 1 der Norm DIN EN 12417 zusammenfassen dargestellt. Diese Norm gibt zahlreiche Beispiele für sicherheitsrelevante Einrichtungen einer Werkzeugmaschine, die für die Überwachung in Frage kommen, ohne dass diese an sich bekannten Einrichtungen an dieser Stelle einzeln aufgezählt werden müssen.

Die erfindungsgemäße Vorrichtung kann einen Empfänger zum Empfang eines Signal zur Steuerung einer der Einrichtungen zum Festlegen eines Abschaltzeitpunktes und/oder einer der Einrichtungen zum Festlegen eines Wiedereinschaltzeitpunkts aufweisen. Beispielsweise kann der Empfänger dazu eingerichtet sein, das Steuersignal mittels einer Short Message Service (SMS) -Kurznachricht über ein Telekommunikationsnetz zu empfangen.

Bei einer vorteilhaften Ausgestaltung der erfindungsgemäßen Vorrichtung ist zudem eine über ein Telekommunikationsnetz aktivierbare Abfrageeinrichtung vorgesehen, die dazu eingerichtet ist, auf eine Fernabfrage hin über ein Telekommunikationsnetz Daten betreffend den Betriebszustand der Werkzeugmaschine als Antwort zu übertragen. Die Datenübertragung zur Übertragung von Betriebszustandsdaten an eine externe Station kann jedoch auch ohne Abfrage kontinuierlich oder periodisch erfolgen. Hierdurch wird es beispielsweise ermöglicht, dass mittels eines Mobilfunkgerätes ein anstehendes Programm einer Werkzeugmaschine nur dann gestartet wird, wenn in Folge der Abfrage sichergestellt ist, dass genügend Werkstücke und/oder Werkzeuge in betriebsbereitem Zustand vorhanden sind. Ein anderes Beispiel kann einen sicherheitsrelevanten Zustand der Werkzeugmaschine betreffen, wobei beispielsweise durch Fernabfrage zunächst geklärt wird, ob Sicherheitskreise den sicheren Zustand melden, z.B. ob die Tür zum Arbeitsraum im Schlafzustand verschlossen ist, so dass ein unbeaufsichtigter Fernstart der Werkzeugmaschine unter Einhaltung der entsprechenden Sicherheitsvorschriften ermöglicht wird.

Weitere besonders vorteilhafte Ausführungsformen der vorliegenden Erfindung werden nachfolgend auf die Figuren beschrieben, von denen
- Fig. 1: schematisch die Struktur eines Ausführungsbeispiels einer erfindungsgemäßen Vorrichtung zum Steuern von Betriebsfunktionen einer Werkzeugmaschine,
- Fig. 2 ein: Ausführungsbeispiel einer Einrichtung zum Festlegen eines Abschaltzeitpunkts einer Betriebsfunktion der Werkzeugmaschine in Abhängigkeit eines auswählbaren Kriteriums, wie es in Fig. 1 gezeigt ist,
- Fig.3 eine: Ausführungsbeispiel einer erfindungsgemäßen Einrichtung zum Wiedereinschalten einer Betriebsfunktion der Werkzeugmaschine nach Abschaltung, wie sie in Fig. 1 gezeigt ist, und
- Fig. 4 ein: Beispiel einer Menüführung einer erfindungsgemäßen Vorrichtung zum Steuern von Betriebsfunktionen einer Werkzeugmaschine über das Steuerpult der Werkzeugmaschine zeigen.

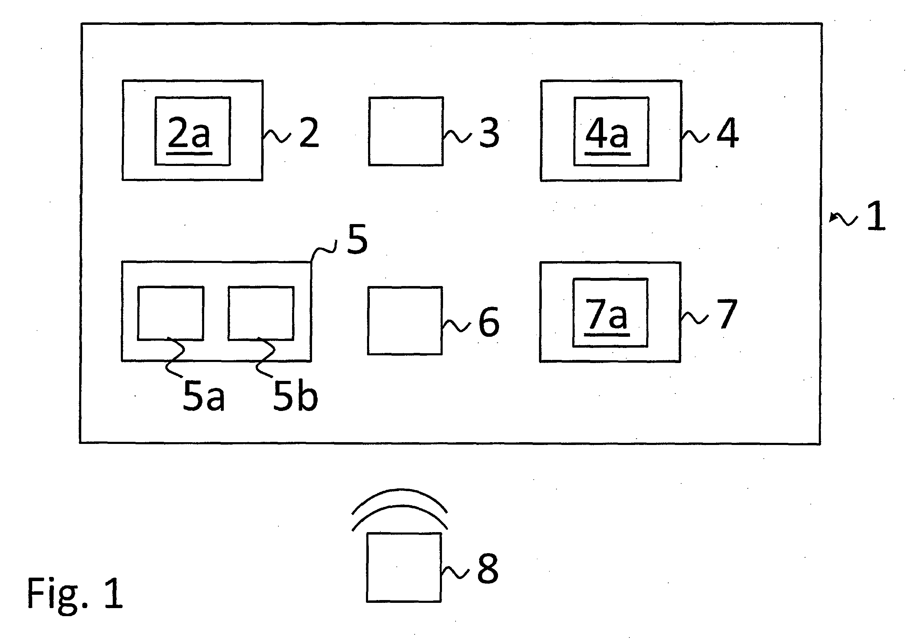

Fig. 1 zeigt in einer schematischen Darstellung die Gesamtstruktur einer erfindungsgemäßen Vorrichtung 1 zum Steuern von Betriebsfunktionen einer Werkzeugmaschine, anhand derer insbesondere die Aspekte betreffend Sicherheitsüberwachung und Fernabfrage veranschaulicht werden sollen.

Die erfindungsgemäße Vorrichtung 1 weist einen konventionellen Hauptstromversorgungsschalter 2 auf, sowie einen Verriegelungsschalter 2a, der den Hauptschalter 2 gegen ein unbeabsichtigtes Ausschalten der Werkzeugmaschine schützt. Darüber hinaus weist die erfindungsgemäße Vorrichtung 1 eine Einrichtung 3 zum Festlegen eines Abschaltzeitpunkts einer Betriebsfunktion der Werkzeugmaschine in Abhängigkeit eines auswählbaren Kriteriums auf. Das Bezugszeichen 4 bezeichnet eine Einrichtung zum Festlegen eines Wiedereinschaltzeitpunkts, zu dem eine Betriebsfunktion der Werkzeugmaschine nach dem Abschalten wieder aktiviert wird.

Ferner weist die erfindungsgemäße Vorrichtung 1 eine Einrichtung 5 zur Überwachung von sicherheitsrelevanten Einrichtungen der Werkzeugmaschine auf. Ein Empfänger zum Empfang eines Signals zur Steuerung der Einrichtungen zum Festlegen eines Abschaltzeitpunkts und zum Festlegen eines Wiedereinschaltzeitpunkts einer Betriebsfunktion der Werkzeugmaschine trägt das Bezugszeichen 6. Mit dem Empfänger 6 ist eine Abfrageeinrichtung 7 verbunden, mittels derer Daten zur Überwachung des Betriebszustands der Werkzeugmaschine über ein Telekommunikationsnetz durch Fernabfrage angefordert werden können. Zu diesem Zweck weist die Abfrageeinrichtung 7 einen entsprechenden Sender 7a zur Übertragung von Betriebszustandsdaten an eine externe Station 8 auf. Im vorgegebenen Ausführungsbeispiel ist die erfindungsgemäße Vorrichtung 1 derart konfiguriert, dass die Übertragungseinrichtung 7 nur auf Abfrage nach Erhalt eines entsprechenden Abfragesignals über ein Telekommunikationsnetz (z.B. GSM) die betreffenden Betriebszustandsdaten mittels des Senders 7a übermittelt. Im vorliegenden Ausführungsbeispiel sind dies Betriebszustandsdaten, die Auskunft darüber geben können, ob ein Programm zur Bearbeitung ansteht und ob ausreichend Werkzeuge und Werkstücke zur Bearbeitung zur Verfügung stehen. Nach Erhalt entsprechender Bestätigungsnachrichten von der Abfrageeinrichtung 7, die über den Sender 7a übertragen wurden, kann durch die externe Station 8, bei der es sich im vorliegenden Beispiel um ein Mobilfunkgerät handelt, ein Wiedereinschaltsignal in Form eines Programmstartbefehls per SMS an den Empfänger 6 übertragen werden.

Im vorliegenden Ausführungsbeispiel umfasst die Überwachungseinrichtung 5 einen Sensor 5a, der eine Tür zum Arbeitsraum daraufhin überwacht, ob sie geöffnet oder geschlossen ist. Darüber hinaus weist die Überwachungseinrichtung 5 einen Sensor 5b auf, der den Arbeitsraum auf die Anwesenheit von Personen überwacht. Die erfindungsgemä-βe Vorrichtung 1 ist im folgenden Ausführungsbeispiel derart konfiguriert, dass eine Wiedereinschaltverhinderungseinrichtung 4a, die Bestandteil der Einrichtung zum Festlegen eines Wiedereinschaltzeitpunkts einer Betriebsfunktion der Werkzeugmaschine ist, die Wiedereinschaltung der Werkzeugmaschine nicht zulässt, falls Sensor 5a detektiert, dass die Tür geöffnet ist und/oder der Sensor 5b detektiert, dass sich eine Person im Arbeitsraum befindet.

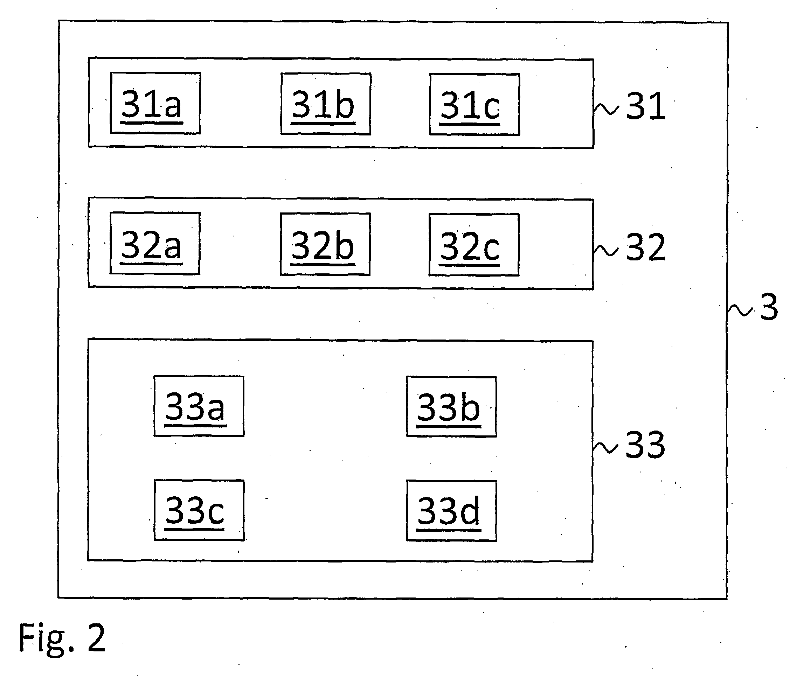

Fig. 2 zeigt ein Ausführungsbeispiel der erfindungsgemäßen Einrichtung 3 zur Festlegung eines Abschaltzeitpunkts einer Betriebsfunktion der Werkzeugmaschine, wie sie im Ausführungsbeispiel der Fig. 1 gezeigt ist. Die Einrichtung 3 umfasst eine Einrichtung 31 zum Festlegen eines Abschaltzeitpunkts, zu dem der Motor des Hauptantriebs der Werkzeugmaschine abgeschaltet wird; eine Einrichtung 32 zum Festlegen eines Abschaltzeitpunkts, zu dem ein Druck eine Sperrluftversorgung der Werkzeugmaschine reduziert wird; eine Einrichtung 33 zum Festlegen eines Abschaltzeitpunkts, zu dem eine Temperatur des Kühlschmiermittels der Werkzeugmaschine reduziert wird und eine Einrichtung 34 zum Festlegen eines Abschaltzeitpunkts, zu dem ein Steuerrechner der Werkzeugmaschine in einen Stromsparmodus versetzt wird.

Die Einrichtung 31 zum Festlegen eines Abschaltzeitpunkts, zu dem der Motor des Hauptantriebs der Werkzeugmaschine abgeschaltet wird, weist eine Einrichtung 31a auf, mittels derer der Anwender einen konkreten Zeitpunkt, z.B. 1. Februar 2010, 07:30 Uhr eingeben kann, zu dem der Motor des Hauptantriebs der Werkzeugmaschine abgeschaltet werden soll. Mittels der Einrichtung 31b kann der Anwender festlegen, dass der Motor des Hauptantriebs nach Ablauf einer gewissen Zeitspanne, z.B. 3,5 Stunden, abgeschaltet wird. Mithin handelt es sich bei den Einrichtungen 31a und 31b um Einrichtungen zur Festlegung der Abschaltuhrzeit.

Die Einrichtung 31c ist eine Einrichtung zur Festlegung eines Abschaltzeitpunkts einer Betriebsfunktion der Werkzeugmaschine in Abhängigkeit des Eintritts eines vorbestimmten Betriebszustands der Werkzeugmaschine. Genauer gesagt handelt es sich bei diesem Ausführungsbeispiel um eine Einrichtung zum Festlegen eines Abschaltzeitpunkts, die den Abschaltzeitpunkt derart festlegt, dass die Abschaltung der Betriebsfunktion nach Ablauf des anstehenden Programms zur Werkstückbearbeitung erfolgt. Mit anderen Worten handelt es sich hierbei um die ereignisgetriggerte Festlegung eines Abschaltzeitpunkts für ein Aggregat der Werkzeugmaschine. Während es sich bei den Einrichtungen 31a, 31b zur Festlegung der Abschaltuhrzeit um Einrichtungen handelt, bei denen der Nutzer Uhrzeit bzw. Zeitspanne über die Tastatur eingeben kann, ist die Einrichtung 31c so ausgestaltet, dass bestimmte Betriebszustände vordefiniert sind, die dem Anwender zur Auswahl in Form eines Pulldown-Menüs angeboten werden. Im folgenden Ausführungsbeispiel betreffend die Einrichtung 31 zur Festlegung eines Abschaltzeitpunkts eines Motors des Hauptantriebs der Werkzeugmaschine wird dem Bearbeiter der Ablauf des anstehenden Programms angeboten. Der Anwender kann durch Auswahl der entsprechenden Einrichtungen 31a, 31b, 31c den Abschaltzeitpunkt des Motors des Hauptantriebs mittels der gezeigten Einrichtung 31 in flexibler Weise festlegen.

Die Einrichtung 32 zur Festlegung eines Abschaltzeitpunkts, zu dem ein Druck einer Sperrluftversorgung der Werkzeugmaschine reduziert wird, weist Einrichtungen 32a und 32b zur Festlegung der Abschaltuhrzeit auf, die den oben beschriebenen Einrichtungen 31a und 31b der Einrichtung 31 zur Festlegung eines Abschaltzeitpunkts, zu dem der Motor des Hauptantriebs der Werkzeugmaschine abgeschaltet wird, entsprechen. Darüber hinaus weist die Einrichtung 32 eine Einrichtung 32c zur Festlegung eines Abschaltzeitpunkts, zu dem ein Druck einer Sperrluftversorgung der Werkzeugmaschine reduziert wird, in Abhängigkeit des Eintritts eines vorbestimmten Betriebszustands der Werkzeugmaschine auf. Bei dem vorliegenden Ausführungsbeispiel betreffend die Einrichtung 32 stehen dem Bearbeiter mittels der Einrichtung 32c drei verschiedene Betriebszustände zur Verfügung, nämlich 10 Minuten, 20 Minuten und 30 Minuten nach Abschalten des Motors des Hauptantriebs der Werkzeugmaschine. Auf diese Weise wird es dem Bearbeiter ermöglicht, nach Abschalten des Hauptantriebs die Sperrluftzufuhr für einen gewissen Zeitraum fortzusetzen, um auf diese Weise das zuverlässige Entfernen von anhaftenden Partikelansammlungen zu gewährleisten.

Die Einrichtung 33 zur Festlegung eines Abschaltzeitpunkts, zu dem die Temperatur eines Kühlschmiermittels reduziert wird, weist analoge Einrichtungen 33a und 33b auf, die wie oben beschrieben als Einrichtungen zur Festlegung der Abschaltuhrzeit ausgeführt sind.

Darüber hinaus weist die Einrichtung 33 eine Einrichtung 33c auf, mittels derer festgelegt werden kann, dass die Kühlmitteltemperierung nach Stillsetzen des Motors des Hauptantriebs der Werkzeugmaschine zunächst abgeschaltet wird, jedoch beim Erreichen einer Temperatur von z.B. 13°C wieder eingeschaltet wird. Diese Eingabe erfolgt mittels der Einrichtung 33d, die ein Ausführungsbeispiel für eine Einrichtung zur Festlegung eines Betriebszustands einer Funktion der Werkzeugmaschine im Abschaltzustand darstellt.

Mittels der in Fig. 2 gezeigten Einrichtung 3 kann der Bearbeiter der Werkzeugmaschine ein stufenweises Herunterfahren der verschiedenen Betriebsfunktionen der Werkzeugmaschine anhand verschiedener vorgegebener Kriterien festlegen. Auf diese Weise wird eine betriebssichere Abschaltung der Werkzeugmaschine mit gegenüber herkömmlichen Werkzeugmaschinen verringertem Energieverbrauch ermöglicht, da sichergestellt wird, dass keines der Aggregate der Werkzeugmaschine länger als notwendig betrieben werden muss. Durch die Erhöhung des Grads an Automatisierung kann zudem der Bedarf an Bearbeitern an der Werkzeugmaschine verringert werden.

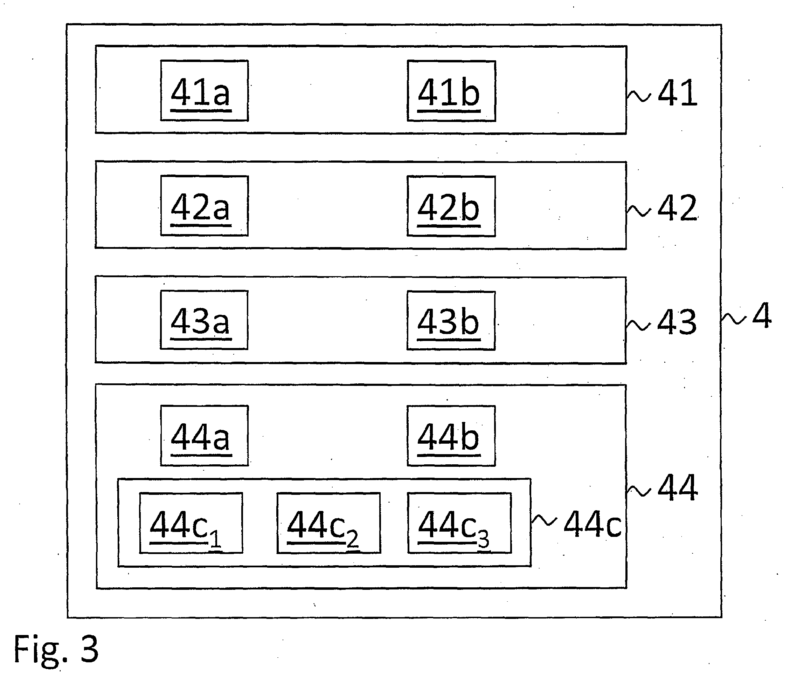

Fig. 3 zeigt ein Ausführungsbeispiel der Einrichtung 4 zur Festlegung eines Wiedereinschaltzeitpunkts einer Betriebsfunktion einer Werkzeugmaschine nach zwischenzeitlicher Abschaltung, wie sie in Fig. 1 gezeigt ist, im Detail.

Die Einrichtung 4 umfasst eine Einrichtung 41 zum Festlegen eines Wiedereinschaltzeitpunkts, zu dem eine Hauptenergieversorgung der Werkzeugmaschine nach dem Abschalten wieder eingeschaltet wird.

Diese Einrichtung 41 ist mit Einrichtungen 41a und 41b ausgestattet, die als Einrichtungen zum Festlegen einer Wiedereinschaltuhrzeit in direkter Weise durch Eingabe der betreffenden Uhrzeit oder durch Eingabe eines Zeitintervalls ausgestaltet sind, analog zu den oben beschriebenen Einrichtungen 31a und 31b.

Die gezeigte Einrichtung 4 zur Festlegung eines Wiedereinschaltzeitpunkts weist zudem eine Einrichtung 42 zur Festlegung eines Wiedereinschaltzeitpunkts der Vorschubmotoren und eine Einrichtung 43 zur Festlegung eines Wiedereinschaltzeitpunkts, zu dem der Motor des Hauptantriebs der Werkzeugmaschine wieder eingeschaltet wird. Bei den Einrichtungen 42 und 43 weisen Einrichtungen 42a bzw. 42b und 43a bzw. 43b zur Festlegung der Einschaltuhrzeit der betreffenden Motoren auf. Mittels dieser Einrichtungen 42 und 43 kann beispielsweise ein gezielter Warmlauf entsprechender Aggregate vor Teileprogrammstart eingestellt werden. Warmlauf im Sinne der Erfindung ist jedoch nicht auf diese Ausführungsbeispiele betreffend Vorschubmotoren und Hauptantriebsmotor begrenzt, sondern kann sämtliche Aggregate, wie z.B. Temperierung des Maschinenbetts etc., mit umfassen, die zur Präzisionsbearbeitung notwendig sind.

Zudem weist die Einrichtung zur Festlegung eines Wiedereinschaltzeitpunkts 4 eine Einrichtung 44 auf, mittels derer der Wiedereinschaltzeitpunkt eines Steuerrechners der Werkzeugmaschine festgelegt werden kann. Die entsprechenden Einrichtungen 44a und 44b zur Festlegung der Wiedereinschaltuhrzeit des Steuerrechners sind analog den oben erläuterten Einrichtungen als Einrichtung zur Festlegung der Einschaltuhrzeit ausgeführt. Darüber hinaus weist die Einrichtung 44 eine Einrichtung 44c auf, mittels derer ein Teileprogramm gestartet werden kann. Diese Einrichtung 44c weist im vorliegenden Ausführungsbeispiel eine Einrichtung 44c1 auf, die dazu eingerichtet ist, den Start des Teileprogramms von der Bedingung abhängig zu machen, dass der Warmlauf der Motoren, der durch die Einrichtungen 42 und 43 festgelegt worden ist, für eine bestimmte vom Benutzer einzugebende Zeitspanne lang erfolgt ist. Auf diese Weise kann vorgegeben werden, dass erst nach einer vorbestimmten Warmlaufzeit der Motoren ein Programmstart erfolgt. Darüber hinaus weist die Einrichtung 44c die weiteren Einrichtungen 44c2 und 44c3 auf, die wiederum analog den oben beschriebenen Einrichtungen a, b als Einrichtung zur Festlegung einer Wiedereinschaltuhrzeit eines Teilprogramms durch Eingabe der Uhrzeit bzw. der bis dahin verbleibenden Zeitspanne ausgebildet sind.

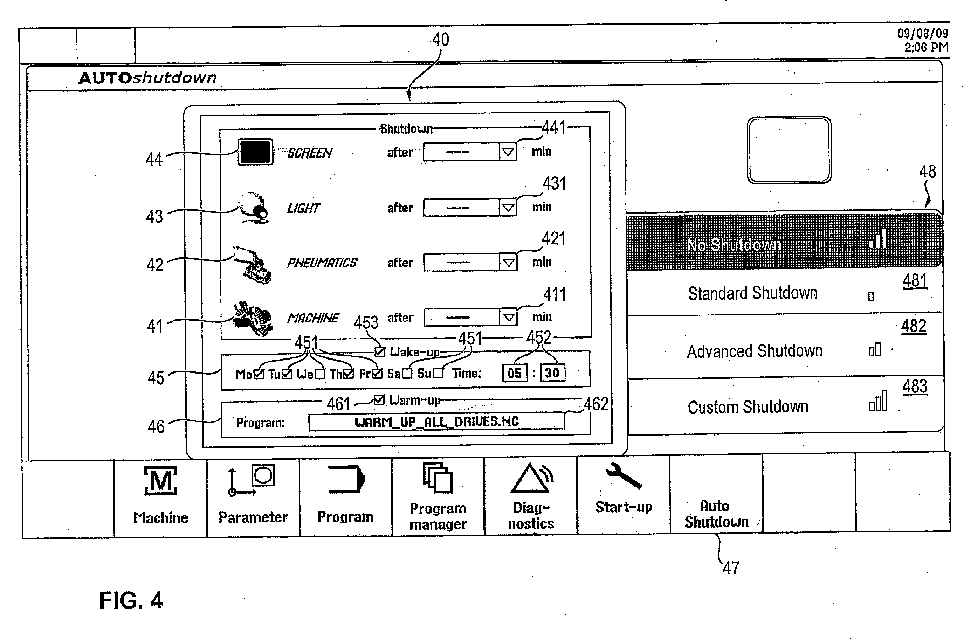

Fig. 4 zeigt ein Ausführungsbeispiel einer Menüführung eines Steuerrechners als ein Ausführungsbeispiel einer erfindungsgemäßen Vorrichtung zum Steuern von Betriebsfunktionen einer Werkzeugmaschine, die eine Einrichtung zum Festlegen eines Abschaltzeitpunkts einer Betriebsfunktion der Werkzeugmaschine und eine Einrichtung zum Festlegen eines Wiedereinschaltzeitpunkts einer Betriebsfunktion der Werkzeugmaschine aufweist, die als Einrichtungen zur Festlegung der Uhrzeit ausgestaltet sind.

Das entsprechende Menü "Auto shutdown" wird durch Auswahl des Feldes 47 aufgerufen.

Wie in Fig. 4 dargestellt, umfasst die Einrichtung 40 zur Festlegung eines Abschaltzeitpunkts einer Betriebsfunktion der Werkzeugmaschine bei diesem Ausführungsbeispiel eine Einrichtung zum Festlegen eines Abschaltzeitpunkts, zu dem die Motoren der Antriebe ("machine") 41 der Werkzeugmaschine abgeschaltet werden, eine Einrichtung zum Festlegen eines Abschaltzeitpunkts, zu dem das pneumatische Pumpensystem ("pneumatics") 42 abgeschaltet wird, eine Einrichtung zum Festlegen eines Abschaltzeitpunkts, zu dem eine Beleuchtung ("light") 43 der Werkzeugmaschine abgeschaltet wird und eine Einrichtung zum Festlegen eines Zeitpunkts, zu dem der Bildschirm ("screen") 44 des Steuerrechners der Werkzeugmaschine in einen Stromsparmodus überführt wird. Diese Einrichtungen 41 - 44 sind jeweils als Einrichtung zur Festlegung der betreffenden Abschaltuhrzeit ausgelegt, wobei in die betreffenden Felder 411, 421, 431 und 441 der Zeitraum bis zum Abschalten in Minuten durch den Bearbeiter eingegeben werden kann ("shutdown after... minutes").

Im unteren Teil der Fig. 4 ist die Menüführung betreffend die Einrichtung 45 zum Festlegen eines Wiedereinschaltpunkts einer Betriebsfunktion der Werkzeugmaschine dargestellt, die in diesem Ausführungsbeispiel als Einrichtung zum Festlegen eines Wiedereinschaltzeitpunkts, zu dem die Funktionen Antriebsmotoren, pneumatisches Pumpensystem, Beleuchtung und Bildschirm, die durch die Einrichtungen 41 - 44 abgeschaltet wurden, wieder eingeschaltet werden können, ausgestaltet ist. Die Aktivierung der Einrichtung zur Festlegung eines Wiedereinschaltzeitpunkts erfolgt über das Eingabefeld 453 ("Wake-up"). In diesem Fall wird durch den Nutzer in Feld 451 der Wochentag ("Mo, Tu, We, Th, Fr, Sa, So") und in Feld 452 die Uhrzeit ("Time") eingegeben, zu dem die betreffenden Funktionen wieder aktiviert werden sollen. Zudem können durch dieses Menü eine Einrichtung zum Warmlauf der Antriebe gestartet werden, deren spezifischen Anweisungen im Programm ("warm_up_ai)_drives.nc") spezifiziert sind, das durch den Nutzer im Feld 46 ausgewählt werden kann. Dieses Programm lässt die zugehörigen Motoren für 30 Minuten laufen. Die Aktivierung dieser Warmlauf-Funktion zum Zeitpunkt des Wiedereinschaltens wird durch das Eingabefeld 461 ("Warm-up") ermöglicht.

Im Menüfeld 48 ist die Möglichkeit vorgegeben, verschiedene vorab gespeicherte Profile 481, 482 und 483 auszuwählen, die alternative Menüs erscheinen lassen, je noch Konfiguration der erfindungsgemäßen Vorrichtung.

Die in Fig. 4 gezeigte Menüführung ist jedoch lediglich exemplarisch und kann beispielsweise durch eine entsprechende menügeführte Abfrageprozedur, die ein teilweises oder vollständiges Abschalten bzw. Wiedereinschalten der relevanten Aggregate sofort oder zu einem späteren Zeitpunkt abfragt, erfolgen.

In dieser Hinsicht sind die geschilderten Ausführungsbeispiele der Erfindung lediglich zur Veranschaulichung der verschiedenen Funktionen dargestellt und die verschiedenen Funktionen und zugehörigen Merkmale können durch den Fachmann in geeigneter Weise kombiniert werden, um Ausführungsbeispiele bereitzustellen, die einem bestimmten vorgegebenen Verwendungszweck entsprechen.

## Patentansprüche

1. Vorrichtung zum Steuern von Betriebsfunktionen einer Werkzeugmaschine mit einer Einrichtung (2) zum Einschalten bzw. Abschalten einer Hauptenergieversorgung, und mindestens einer Einrichtung (3) zum Festlegen eines Abschaltzeitpunkts einer Betriebsfunktion der Werkzeugmaschine in Abhängigkeit eines vorbestimmten auswählbaren Kriteriums, wobei die mindestens eine Einrichtung (3) zum Festlegen eines Abschaltzeitpunkts konfiguriert ist, die Energieversorgung für spezielle Werkzeugmaschinenaggregate und/oder Komponenten separat zu steuern, ohne die Hauptenergieversorgung der Werkzeugmaschine zu unterbrechen, um die betreffende Betriebsfunktion vollständig abzuschalten oder zu reduzieren, und mindestens einer Einrichtung (4) zum Festlegen eines Wiedereinschaltzeitpunkts, zu dem eine Betriebsfunktion der Werkzeugmaschine nach dem Abschalten wieder aktiviert wird, und einer Einrichtung (5) zur Überwachung von sicherheitsrelevanten Einrichtungen, **dadurch gekennzeichnet, dass** die mindestens eine Einrichtung zum Festlegen eines Abschaltzeitpunkts konfiguriert ist, eine Festlegung eines Abschaltzeitpunkts für vorbestimmte Betriebsfunktionen nur zuzulassen, falls die Einrichtung zur Überwachung von sicherheitsrelevanten Einrichtungen keine sicherheitsgefährdenden Betriebszustände der Werkzeugmaschine detektiert.

2. Vorrichtung zum Steuern von Betriebsfunktionen einer Werkzeugmaschine nach Anspruch 1, **dadurch gekennzeichnet, dass** die mindestens eine Einrichtung als eine Einrichtung (31a, 31b; 32a, 32b) zur Festlegung der Abschaltuhrzeit ausgeführt ist.

3. Vorrichtung zum Steuern von Betriebsfunktionen einer Werkzeugmaschine nach Anspruch 1 oder 2, **dadurch gekennzeichnet, dass** die mindestens eine Einrichtung als eine Einrichtung zur Festlegung eines Abschaltzeitpunkts einer Betriebsfunktion der Werkzeugmaschine in Abhängigkeit des Eintritts eines vorbestimmten Betriebszustands der Werkzeugmaschine ausgeführt ist.

4. Vorrichtung zum Steuern von Betriebsfunktionen einer Werkzeugmaschine nach Anspruch 3, **dadurch gekennzeichnet, dass** die mindestens eine Einrichtung zum Festlegen eines Abschaltzeitpunkts konfiguriert ist, den Abschaltzeitpunkt derart festzulegen, dass die Abschaltung der Betriebsfunktion nach Ablauf des anstehenden Programms zur Werkstückbearbeitung erfolgt.

5. Vorrichtung zum Steuern von Betriebsfunktionen einer Werkzeugmaschine nach einem der vorhergehenden Ansprüche, **dadurch gekennzeichnet, dass** die Einrichtung zum Festlegen eines Abschaltzeitpunkts einer Betriebsfunktion der Werkzeugmaschine eine Einrichtung aus der folgenden Gruppe von Einrichtungen ist:
- eine Einrichtung zum Festlegen eines Abschaltzeitpunkts, zu dem der Motor des Hauptantriebs der Werkzeugmaschine abgeschaltet wird;
- eine Einrichtung zum Festlegen eines Abschaltzeitpunkts, zu dem ein Druck einer Sperrluftversorgung der Werkzeugmaschine reduziert wird,
- eine Einrichtung zum Festlegen eines Abschaltzeitpunkts, zu dem eine Energieversorgung eines Bildschirms der Werkzeugmaschine reduziert wird,
- eine Einrichtung zum Festlegen eines Abschaltzeitpunkts, zu dem eine Energieversorgung einer Beleuchtungseinrichtung der Werkzeugmaschine reduziert wird,
- eine Einrichtung zum Festlegen eines Abschaltzeitpunkts, zu dem eine Temperatur des Kühlschmiermittels der Werkzeugmaschine reduziert wird,
- eine Einrichtung zum Festlegen eines Abschaltzeitpunkts, zu dem eine Umwälzung des Kühlschmiermittels der Werkzeugmaschine reduziert wird.
- eine Einrichtung zum Festlegen eines Abschaltzeitpunkts, zu dem ein Steuerrechner der Werkzeugmaschine in einen Stromsparmodus versetzt wird.

6. Vorrichtung zum Steuern von Betriebsfunktionen einer Werkzeugmaschine nach einem der vorhergehenden Ansprüche, **dadurch gekennzeichnet, dass** die Vorrichtung eine oder mehrere Anzeigeeinrichtungen aufweist die konfiguriert ist bzw. sind, anzuzeigen, ob eine oder mehrere der in Anspruch 4 genannten Maschinenfunktionen sich im Abschaltzustand oder im Einschaltzustand befinden.

7. Vorrichtung zum Steuern von Betriebsfunktionen einer Werkzeugmaschine nach einem der vorhergehenden Ansprüche, **dadurch gekennzeichnet, dass** die mindestens eine Einrichtung zum Festlegen eines Abschaltzeitpunkts eine Einrichtung zur Festlegung eines Betriebszustands einer Funktion der Werkzeugmaschine im Abschaltzustand aufweist.

8. Vorrichtung zum Steuern von Betriebsfunktionen einer Werkzeugmaschine nach Anspruch 7, **dadurch gekennzeichnet, dass** die Einrichtung zur Festlegung des Betriebszustands einer Funktion der Werkzeugmaschine im Abschaltzustand dazu eingerichtet ist, den Zustand der Betriebsfunktion nach Abschaltung für die Funktion festzulegen, für die der Abschaltzeitpunkt festgelegt wird.

9. Vorrichtung zum Steuern von Betriebsfunktionen einer Werkzeugmaschine nach Anspruch 7, **dadurch gekennzeichnet, dass** die Einrichtung zur Festlegung des Betriebszustands einer Funktion der Werkzeugmaschine im Abschaltzustand dazu eingerichtet ist, den Zustand der Betriebsfunktion nach Abschaltung für eine weitere Betriebsfunktion der Werkzeugmaschine festzulegen, die nicht der Betriebsfunktion entspricht, für die der Abschaltzeitpunkt festgelegt wird.

10. Vorrichtung zum Steuern von Betriebsfunktionen einer Werkzeugmaschine nach einem der vorhergehenden Ansprüche **dadurch gekennzeichnet, dass** die Vorrichtung dazu konfiguriert ist, bei Abschaltung der Energieversorgung durch Betätigung des Hauptschalters der Werkzeugmaschine mindestens eine Einrichtung zum Festlegen eines Abschaltzeitpunkts zu aktivieren, derart, dass die entsprechende Betriebsfunktion ohne Verzögerung abgeschaltet wird.

11. Vorrichtung zum Steuern von Betriebsfunktionen einer Werkzeugmaschine nach Anspruch 8, **dadurch gekennzeichnet, dass** die Einrichtung zum Festlegen eines Wiedereinschaltzeitpunkts eine Einrichtung aus der folgenden Gruppe von Einrichtungen ist:
- eine Einrichtung zum Festlegen eines Wiedereinschaltzeitpunkts, zu dem eine Hauptenergieversorgung der Werkzeugmaschine nach dem Abschalten wieder eingeschaltet wird,
- eine Einrichtung zum Festlegen eines Wiedereinschaltzeitpunkts, zu dem der Motor des Hauptantriebs der Werkzeugmaschine nach dem Abschalten wieder eingeschaltet wird;
- eine Einrichtung zum Festlegen eines Wiedereinschaltzeitpunkts, zu dem ein Druck einer Sperrluftversorgung der Werkzeugmaschine nach dem Abschalten wieder erhöht wird,
- eine Einrichtung zum Festlegen eines Wiedereinschaltzeitpunkts, zu dem eine Energieversorgung eines Bildschirms der Werkzeugmaschine nach dem Abschalten wieder erhöht wird,
- eine Einrichtung zum Festlegen eines Wiedereinschaltzeitpunkts, zu dem eine Energieversorgung einer Beleuchtungseinrichtung der Werkzeugmaschine nach dem Abschalten wieder erhöht wird,
- eine Einrichtung zum Festlegen eines Wiedereinschaltzeitpunkts, zu dem eine Temperatur des Kühlschmiermittels der Werkzeugmaschine nach dem Abschalten wieder erhöht wird,
- eine Einrichtung zum Festlegen eines Wiedereinschaltzeitpunkts, zu dem eine Umwälzung des Kühtschmiermittels der Werkzeugmaschine nach dem Abschalten wieder erhöht wird,
- eine Einrichtung zum Festlegen eines Wiedereinschaltzeitpunkts, zu dem ein Steuerrechner der Werkzeugmaschine wieder aktiviert wird, und gegebenenfalls ein Bearbeitungsprogramm gestartet wird.

12. Vorrichtung zum Steuern von Betriebsfunktionen einer Werkzeugmaschine nach Anspruch 8 oder 9 **dadurch gekennzeichnet, dass** die mindestens Einrichtung (4) zum Festlegen eines Wiedereinschaltzeitpunkts eine Einrichtung zur Festlegung der Einschaltuhrzeit durch den Bearbeiter aufweist.

13. Vorrichtung zum Steuern von Betriebsfunktionen einer Werkzeugmaschine nach einem der Ansprüche 8 bis 10 **dadurch gekennzeichnet, dass** die Vorrichtung eine Einrichtung zur Überwachung von sicherheitsrelevanten Einrichtungen aufweist, und die Einrichtung zum Festlegen eines Wiedereinschaltzeitpunkts derart konfiguriert ist, dass bestimmte Betriebsfunktionen nicht wieder aktiviert werden können, wenn die Einrichtung zur Überwachung von sicherheitsrelevanten Einrichtungen einen sicherheitsgefährdenden Betriebszustand der Werkzeugmaschine detektiert.

14. Vorrichtung zum Steuern von Betriebsfunktionen einer Werkzeugmaschine nach einem der vorhergehenden Ansprüche, **dadurch gekennzeichnet, dass** die Einrichtung zur Überwachung von sicherheitsrelevanten Einrichtungen einen Sensor umfasst, der detektiert, ob sich Personen im Arbeitsraum der Maschine aufhalten.

15. Vorrichtung zum Steuern von Betriebsfunktionen einer Werkzeugmaschine nach einem der vorhergehenden Ansprüche, **dadurch gekennzeichnet, dass** die Vorrichtung einen Empfänger (6) zum Empfang eines Signals zur Steuerung einer der Einrichtungen zum Festlegen eines Abschaltzeitpunkts und/oder einer der Einrichtungen zum Festlegen eines Wiedereinschaltzeitpunkts aufweist.

16. Vorrichtung zum Steuern von Betriebsfunktionen einer Werkzeugmaschine nach Anspruch 15 **dadurch gekennzeichnet, dass** der Empfänger dazu eingerichtet ist, das Steuersignal mittels einer Short Message Service (SMS)-Kurznachricht über eine Telekommunikationsnetz zu empfangen.

17. Vorrichtung zum Steuern von Betriebsfunktionen einer Werkzeugmaschine nach Anspruch 15 oder 16, **dadurch gekennzeichnet, dass** die Vorrichtung eine Abfrageeinrichtung (7) aufweist, die dazu eingerichtet ist, Daten betreffend den Betriebszustand der Werkzeugmaschine über ein Datenkommunikationsnetzwerk an eine externe Station zu übertragen.

## Claims

1. An apparatus for controlling operating functions of a machine tool comprising a device (2) for switching on and off, respectively, a main energy supply and at least one device (3) for setting a switch-off time of an operating function of the machine tool depending on a predetermined selectable criterion, wherein the at least one device (3) for setting a switch-off time is configured to separately control the energy supply for special machine tool assemblies and/or components without interrupting the main energy supply of the machine tool, to completely switch off or reduce the concerned operating function, and least one device (4) for setting a restart time at which an operating function of the machine tool is again activated after switching off, and a device (5) for monitoring safety-relevant devices, **characterized in that** the at least one device for setting a switch-off time is configured to allow setting a switch-off time for predetermined operating functions only if the device for monitoring safety-relevant devices does not detect operating states of the machine tool endangering safety.

2. The apparatus for controlling operating functions of a machine tool according to claim 1, **characterized in that** the at least one device is configured as a device (31a, 31b; 32a, 32b) for setting the switch-off time of day.

3. The apparatus for controlling operating functions of a machine tool according to claim 1 or 2, **characterized in that** the at least one device is configured as a device for setting a switch-off time of an operating function of the machine tool depending on the occurrence of a predetermined operating state of the machine tool.

4. The apparatus for controlling operating functions of a machine tool according to claim 3, **characterized in that** the at least one device for setting a switch-off time is configured to set the switch-off time such that switching off the operating function is effected after run of the pending program for workpiece processing.

5. The apparatus for controlling operating functions of a machine tool according to any one of the preceding claims, **characterized in that** the device for setting a switch-off time of an operating function of the machine tool is a device from the following group of devices:
- a device for setting a switch-off time at which the motor of the main drive of the machine tool is switched off;
- a device for setting a switch-off time at which a pressure of a sealing air supply of the machine tool is reduced,
- a device for setting a switch-off time at which an energy supply of a screen of the machine tool is reduced,
- a device for setting a switch-off time at which an energy supply of a lighting device of the machine tool is reduced,
- a device for setting a switch-off time at which a temperature of the cooling lubricant of the machine tool is reduced,
- a device for setting a switch-off time at which a circulation of the cooling lubricant of the machine tool is reduced,
- a device for setting a switch-off time at which a controlling computer of the machine tool is put into a power saving mode.

6. The apparatus for controlling operating functions of a machine tool according to any one of the preceding claims, **characterized in that** the apparatus has one or more display devices which is or are configured to display if one or more of the machine functions mentioned in claim 4 are in the off-state or in the on-state.

7. The apparatus for controlling operating functions of a machine tool according to any one of the preceding claims, **characterized in that** the at least one device for setting a switch-off time has a device for setting an operating state of a function of the machine tool in the off-state.

8. The apparatus for controlling operating functions of a machine tool according to claim 7, **characterized in that** the device for setting the operating state of a function of the machine tool in the off-state is arranged to set the state of the operating function after switching off for the function, for which the switch-off time is set.

9. The apparatus for controlling operating functions of a machine tool according to claim 7, **characterized in that** the device for setting the operating state of a function of the machine tool in the off-state is arranged to set the state of the operating function after switching off for a further operating function of the machine tool which does not correspond to the operating function, for which the switch-off time is set.

10. The apparatus for controlling operating functions of a machine tool according to any one of the preceding claims, **characterized in that** the apparatus is configured to activate at least one device for setting a switch-off time upon switching off the energy supply by actuating the main switch of the machine tool such that the corresponding operating function is switched off without delay.

11. The apparatus for controlling operating functions of a machine tool according to claim 8, **characterized in that** the device for setting a restart time is a device from the following group of devices:
- a device for setting a restart time at which a main energy supply of the machine tool is again switched on after switching off,
- a device for setting a restart time at which the motor of the main drive of the machine tool is again switched on after switching off;
- a device for setting a restart time at which a pressure of a sealing air supply of the machine tool is again increased after switching off,
- a device for setting a restart time at which an energy supply of a screen of the machine tool is again increased after switching off,
- a device for setting a restart time at which an energy supply of a lighting device of the machine tool is again increased after switching off,
- a device for setting a restart time at which a temperature of the cooling lubricant of the machine tool is again increased after switching off,
- a device for setting a restart time at which a circulation of the cooling lubricant of the machine tool is again increased after switching off,
- a device for setting a restart time at which a controlling computer of the machine tool is again activated and optionally a processing program is started.

12. The apparatus for controlling operating functions of a machine tool according to claim 8 or 9, **characterized in that** the at least one device (4) for setting a restart time has a device for setting the switch-on time of day by the operator.

13. The apparatus for controlling operating functions of a machine tool according to any one of claims 8 to 10, **characterized in that** the apparatus has a device for monitoring safety-relevant devices, and the device for setting a restart time is configured such that certain operating functions cannot be again activated if the device for monitoring safety-relevant devices detects an operating state of the machine tool endangering safety.

14. The apparatus for controlling operating functions of a machine tool according to any one of the preceding claims, **characterized in that** the device for monitoring safety-relevant devices includes a sensor which detects if persons are located in the working space of the machine.

15. The apparatus for controlling operating functions of a machine tool according to any one of the preceding claims, **characterized in that** the device has a receiver (6) for receiving a signal for controlling one of the devices for setting a switch-off time and/or one of the devices for setting a restart time.

16. The apparatus for controlling operating functions of a machine tool according to claim 15, **characterized in that** the receiver is arranged to receive the control signal by means of a short message service (SMS) short message via a telecommunication network.

17. The apparatus for controlling operating functions of a machine tool according to claim 15 or 16, **characterized in that** the device has an interrogating device (7) which is arranged to transmit data relating to the operating state of the machine tool to an external station via a data communication network.

## Revendications

1. Dispositif de commande des fonctions opérationnelles d'une machine-outil, comportant
un moyen (2) de mise en circuit ou hors circuit d'une alimentation principale en énergie, et
au moins un moyen (3) de fixation d'un instant de mise hors circuit d'une fonction opérationnelle de la machine-outil en fonction d'un critère sélectionnable prédéterminé, ledit au moins un moyen (3) de fixation d'un instant de mise hors circuit étant configuré pour commander séparément l'alimentation en énergie d'unités spéciales de la machine-outil et/ou de composants spéciaux, sans interrompre l'alimentation principale en énergie de la machine-outil, afin de mettre hors circuit complètement la fonction opérationnelle correspondante ou de la réduire, et
au moins un moyen (4) de fixation d'un instant de remise en circuit, auquel une fonction opérationnelle de la machine-outil est réactivée après une mise hors circuit, et
un moyen (5) de surveillance des moyens pertinents en termes de sécurité,
**caractérisé en ce que**
ledit au moins un moyen de fixation d'un instant de mise hors circuit est configuré pour n'admettre une fixation de l'instant de mise hors circuit pour des fonctions opérationnelles prédéterminées que si le moyen de surveillance des moyens pertinents en termes de sécurité ne détecte pas d'états de fonctionnement de la machine-outil qui sont dangereux en termes de sécurité.

2. Dispositif de commande des fonctions opérationnelles d'une machine-outil selon la revendication 1, **caractérisé en ce que** ledit au moins un moyen est réalisé sous la forme d'un moyen (31 a, 31b ; 32, 32b) de fixation de l'heure de mise hors circuit.

3. Dispositif de commande des fonctions opérationnelles d'une machine-outil selon la revendication 1 ou 2, **caractérisé en ce que** ledit au moins un moyen est réalisé sous la forme d'un moyen de fixation de l'heure de mise hors circuit d'une fonction opérationnelle de la machine-outil, en fonction de l'apparition d'un état de fonctionnement prédéterminé de la machine-outil.

4. Dispositif de commande des fonctions opérationnelles d'une machine-outil selon la revendication 3, **caractérisé en ce que** ledit au moins un moyen de fixation d'un instant de mise hors circuit est configuré pour fixer l'instant de mise hors circuit de telle sorte que la mise hors circuit de la fonction opérationnelle s'effectue après l'exécution du programme en cours pour le traitement d'une pièce à oeuvrer.

5. Dispositif de commande des fonctions opérationnelles d'une machine-outil selon l'une des revendications précédentes, **caractérisé en ce que** ledit moyen de fixation d'un instant de mise hors circuit d'une fonction opérationnelle de la machine-outil est un moyen parmi le groupe de moyens suivant :
- un moyen destiné à fixer un instant de mise hors circuit auquel le moteur de l'entraînement principal de la machine-outil est mis hors circuit ;
- un moyen destiné à fixer un instant de mise hors circuit auquel une pression d'une alimentation en air de blocage de la machine-outil est réduite ;
- un moyen destiné à fixer un instant de mise hors circuit auquel une alimentation d'un écran de visualisation de la machine-outil est réduite ;
- un moyen destiné à fixer un instant de mise hors circuit auquel une alimentation en énergie d'un moyen d'éclairage de la machine-outil est réduite ;
- un moyen destiné à fixer un instant de mise hors circuit auquel une température d'un réfrigérant lubrifiant de la machine-outil est réduite ;
- un moyen destiné à fixer un instant de mise hors circuit auquel une circulation d'un réfrigérant lubrifiant de la machine-outil est réduite ;
- un moyen destiné à fixer un instant de mise hors circuit auquel un ordinateur de commande est mis en mode d'économie d'énergie.

6. Dispositif de commande des fonctions opérationnelles d'une machine-outil selon l'une des revendications précédentes, **caractérisé en ce que** le dispositif comprend un ou plusieurs moyens d'affichage qui est ou sont configuré(s) pour afficher si une ou plusieurs des fonctions de machine mentionnées dans la revendication 4 se trouvent dans l'état de mise hors circuit ou dans l'état de mise en circuit.

7. Dispositif de commande des fonctions opérationnelles d'une machine-outil selon la revendication 1, **caractérisé en ce que** ledit au moins un moyen de fixation d'un instant de mise hors circuit comprend un moyen de fixation d'un état de fonctionnement d'une fonction de la machine-outil dans l'état mis hors circuit.

8. Dispositif de commande des fonctions opérationnelles d'une machine-outil selon la revendication 7, **caractérisé en ce que** le moyen de fixation de l'état de fonctionnement d'une fonction de la machine-outil dans l'état mis hors circuit est conçu pour fixer l'état de la fonction opérationnelle, après mise hors circuit, pour la fonction pour laquelle est fixé l'instant de mise hors circuit.

9. Dispositif de commande des fonctions opérationnelles d'une machine-outil selon la revendication 7, **caractérisé en ce que** le moyen de fixation de l'état de fonctionnement d'une fonction de la machine-outil dans l'état mis hors circuit est conçu pour fixer l'état de la fonction opérationnelle, après mise hors circuit, pour une autre fonction opérationnelle de la machine-outil qui ne correspond pas à la fonction opérationnelle pour laquelle est fixé l'instant de mise hors circuit.

10. Dispositif de commande des fonctions opérationnelles d'une machine-outil selon l'une des revendications précédentes, **caractérisé en ce que** le dispositif est configuré pour activer, lors d'une mise hors circuit de l'alimentation en énergie par actionnement de l'interrupteur principal de la machine-outil, au moins un moyen de fixation de l'instant de mise hors circuit, de telle sorte que la fonction opérationnelle correspondante est mise hors circuit sans délai.

11. Dispositif de commande des fonctions opérationnelles d'une machine-outil selon la revendication 8, **caractérisé en ce que** ledit moyen destiné à fixer un instant de remise en circuit est un moyen parmi le groupe de moyens suivant :
- un moyen destiné à fixer un instant de remise en circuit auquel une alimentation principale en énergie de la machine-outil est remise en circuit après la mise hors circuit ;
- un moyen destiné à fixer un instant de remise en circuit auquel le moteur de l'entraînement principal de la machine-outil est remis en circuit après la mise hors circuit ;
- un moyen destiné à fixer un instant de remise en circuit auquel une pression d'une alimentation en air de blocage de la machine-outil est à nouveau augmentée après la mise hors circuit ;
- un moyen destiné à fixer un instant de remise en circuit auquel une alimentation en énergie d'un écran de visualisation de la machine-outil est à nouveau augmentée après la mise hors circuit ;
- un moyen destiné à fixer un instant de remise en circuit auquel une alimentation en énergie d'un moyen d'éclairage de la machine-outil est à nouveau augmentée après la mise hors circuit ;
- un moyen destiné à fixer un instant de remise en circuit auquel une température d'un réfrigérant lubrifiant de la machine-outil est à nouveau augmentée après la mise hors circuit ;
- un moyen destiné à fixer un instant de remise en circuit auquel une circulation d'un réfrigérant lubrifiant de la machine-outil est à nouveau augmentée après la mise hors circuit ;
- un moyen destiné à fixer un instant de remise en circuit auquel un ordinateur de commande est réactivé et le cas échéant un programme de traitement est démarré.

12. Dispositif de commande des fonctions opérationnelles d'une machine-outil selon la revendication 8 ou 9, **caractérisé en ce que** ledit au moins un moyen (4) destiné à fixer un instant de remise en circuit est un moyen de fixation de l'heure de remise en circuit par la personne en charge.

13. Dispositif de commande des fonctions opérationnelles d'une machine-outil selon l'une des revendications 8 à 10, **caractérisé en ce que** le dispositif comprend un moyen de surveillance des moyens pertinents en termes de sécurité, et le moyen de fixation d'un instant de remise en circuit est configuré de telle sorte que certaines fonctions opérationnelles ne peuvent pas être réactivées si le moyen de surveillance des moyens pertinents en termes de sécurité détecte un état de fonctionnement de la machine-outil qui est dangereux en termes de sécurité.

14. Dispositif de commande des fonctions opérationnelles d'une machine-outil selon l'une des revendications précédentes, **caractérisé en ce que** le moyen de surveillance des moyens pertinents en termes de sécurité comprend un détecteur qui détecte si des personnes se situent dans l'espace d travail de la machine.

15. Dispositif de commande des fonctions opérationnelles d'une machine-outil selon l'une des revendications précédentes, **caractérisé en ce que** le dispositif comprend un récepteur (6) pour recevoir un signal de commande de l'un des moyens de fixation d'un instant de mise hors circuit et/ou de l'un des moyens de fixation d'un instant de remise en circuit.

16. Dispositif de commande des fonctions opérationnelles d'une machine-outil selon la revendication 15, **caractérisé en ce que** le récepteur est conçu pour recevoir le signal de commande au moyen d'un service de messagerie (SMS - Short Message Service) via un réseau de télécommunication.

17. Dispositif de commande des fonctions opérationnelles d'une machine-outil selon la revendication 15 ou 16, **caractérisé en ce que** le dispositif est un moyen d'interrogation (7) qui est conçu pour transmettre des données concernant l'état de fonctionnement de la machine-outil à un poste externe via un réseau de communication de données.
